Europäisches Patentamt

European Patent Office

Office européen des brevets

(11) Veröffentlichungsnummer: **0 510 785 A1**

# (12) EUROPÄISCHE PATENTANMELDUNG

(21) Anmeldenummer: **92250091.3**

(22) Anmeldetag: **22.04.92**

(51) Int. Cl.5: **B29C 65/14**, B29C 65/02,
B29B 13/02, //B29L23/22

(30) Priorität: **22.04.91 DE 4113408**

(43) Veröffentlichungstag der Anmeldung:
**28.10.92 Patentblatt 92/44**

(84) Benannte Vertragsstaaten:
**DE ES FR IT**

(71) Anmelder: **Herbst, Donald, Dipl.-Ing.,**
**Marienplatz 11**
**W-1000 Berlin 45(DE)**

(72) Erfinder: **Herbst, Donald, Dipl.-Ing.,**
**Marienplatz 11**
**W-1000 Berlin 45(DE)**

(74) Vertreter: **Pfenning, Meinig & Partner**
**Kurfürstendamm 170**
**W-1000 Berlin 15(DE)**

(54) Verfahren und Vorrichtung zum Verschweissen zweier Hohlkörper.

(57) Es wird ein Verfahren und eine Vorrichtung zum Verschweißen zweier mit Öffnungen versehener dünnwandiger Hohlkörper (1,2) zur Erzielung einer dichten Durchgangsverbindung zwischen den Innenräumen der Hohlkörper beschrieben. Hierbei ist mindestens einer der Hohlkörper als Rohr oder Schlauch ausgebildet, dessen eines Ende mit der eine Öffnung umgebenden Wand des anderen Hohlkörpers verschweißt wird, wobei die zu verschweißenden Flächen der Hohlkörper nach einer Erwärmung über die Schmelztemperatur durch Druck zusammengefügt werden. Hierbei erfolgt die Erwärmung des Endes des mindestens einen Rohres oder Schlauches in der Weise, daß das geschmolzene Material ohne Verengung des freien Innenquerschnitts nach außen fließt und einen die Schweißfläche vergrößernden Außenringwulst bildet. Die Herstellung nur eines Außenringwulstes ohne gleichzeitige Entstehung eines Innenringwulstes wird vorzugsweise dadurch erreicht, daß das Ende des Rohres oder Schlauches auf der Außenseite stärker erwärmt wird als auf der Innenseite.

FIG. 1

EP 0 510 785 A1

Die Erfindung betrifft eine Verfahren nach dem Oberbegriff des Anspruchs 1 sowie eine Vorrichtung zu dessen Durchführung.

Zum endseitigen Verschweißen von Rohren oder Schläuchen miteinander ist das sogenannte Stumpfschweißen bekannt, bei dem die zu verschweißenden Enden gegen geheizte Spiegel gepreßt werden, bis sie ausreichend erweicht werden. Anschließend werden diese Enden unter Druck zusammengepreßt, so daß nach dem Erkalten eine feste Schweißverbindung erhalten wird. Dieses Verfahren hat den Nachteil, daß sich sowohl auf der Innen- als auch auf der Außenseite der Rohrenden ein in seiner Größe vom Preßdruck, der Spiegeltemperatur und der Dauer des Andrückens an den Spiegel abhängiger Wulst bildet, der den freien Innenquerschnitt im Bereich der Rohrverbindung verringert.

Dieser Nachteil kann durch das sogenannte Muffenschweißen vermieden werden, bei dem eine die Rohrenden umgebende Muffe mit diesen verschweißt wird und so die Verbindung herstellt. Dieses Verfahren hat jedoch den Nachteil, daß es ein zusätzliches Teil, nämlich die Muffe erfordert, und außerdem zwei Schweißvorgänge notwendig sind, nämlich das Verschweißen der Muffe mit den beiden Rohren.

Es ist daher die Aufgabe der vorliegenden Erfindung, ein Verfahren zum Verschweißen zweier mit Öffnungen versehener, dünnwandiger Hohlkörper zur Erzielung einer dichten Durchgangsverbindung zwischen den Innenräumen der Hohlkörper, wobei mindestens einer der Hohlkörper als Rohr oder Schlauch ausgebildet ist, dessen eines Ende mit der eine Öffnung umgebenden Wand des anderen Hohlkörpers verschweißt wird, derart, daß die zu verschweißenden Flächen der Hohlkörper nach einer Erwärmung über die Schmelztemperatur durch Druck zusammengefügt werden, anzugeben, bei dem ein den Durchgangsquerschnitt einschränkender Innenwulst nicht auftritt und das trotzdem ohne ein zusätzliches Verbindungsteil und ohne einen zweiten Schweißvorgang auskommt.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens sowie bevorzugte Vorrichtungen zu dessen Durchführung ergeben sich aus den Unteransprüchen.

Dadurch, daß die Erwärmung des Endes des mindestens einen Rohres oder Schlauches in der Weise erfolgt, daß das geschmolzene Material ohne Verengung des freien Innenquerschnitts nach außen fließt und einen die Schweißfläche vergrößernden Außenringwulst bildet, das heißt, daß sich unterschiedlich zum Stumpfschweißen beim Schmelzen des Materials kein Innenwulst bildet, wird ein definierter und nicht verengter Durchgangsquerschnitt im Bereich der Verbindung erhalten.

Das Fließen des geschmolzenen Materials nur nach außen wird vorzugsweise dadurch erzielt, daß das Ende des Rohres oder Schlauches auf der Außenseite über einen größeren Bereich erwärmt wird als auf der Innenseite. Dies kann durch eine geeignete Ausbildung eines durch Wärmestrahlung auf das Rohr- oder Schlauchende einwirkenden Heizelements erreicht werden.

Die Erfindung wird im folgenden anhand von in den Figuren dargestellten Ausführungsbeispielen näher erläutert. Es zeigen:

Fig. 1 die Herstellung einer Schweißverbindung zwischen zwei Rohrenden in drei aufeinanderfolgenden Verfahrensstufen,

Fig. 2 eine erste Vorrichtung zur Herstellung einer Schweißverbindung zwischen zwei Rohrenden, und

Fig. 3 eine zweite Vorrichtung zur Herstellung einer Schweißverbindung zwischen zwei Rohrenden.

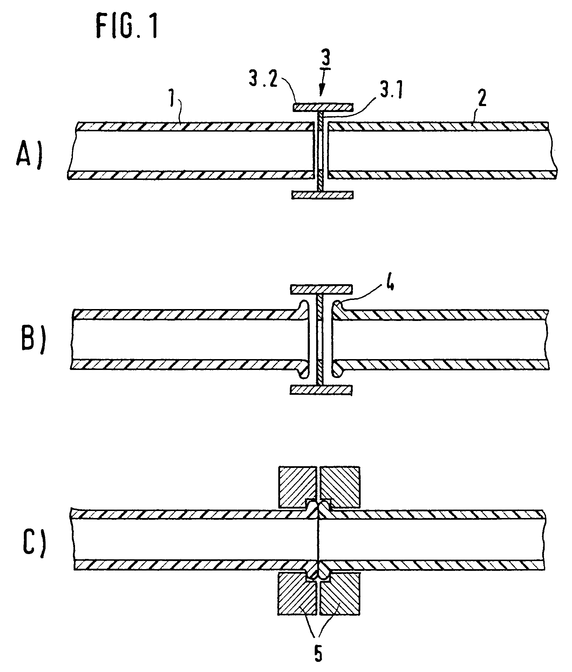

In Fig. 1 sind zwei endseitig miteinander zu verbindende Rohre 1 und 2 aus Kunststoff mit gleichem Innen-und Außendurchmesser dargestellt. In der Stufe A werden die beiden Rohre 1 und 2 so zueinander positioniert, daß ihre Achsen zusammenfallen und ihre miteinander zu verschweißenden Enden sich in einem vorgegebenen Abstand gegenüberstehen. Zwischen diese Enden wird dann mit jeweils gleichem Abstand zu diesen ein wärmestrahlendes Heizelement 3 gebracht. Dieses weist einen wärmestrahlenden Ring 3.1 auf, der von einem ihn umgebenden Zylinder 3.2 gehalten wird. Der Ring 3.1 und der Zylinder 3.2 können in Längsrichtung geteilt sein, so daß die beiden Teile jeweils aus entgegengesetzten Richtungen zwischen die Rohrenden gebracht werden können.

Der Ring 3.1 besitzt einen Innendurchmesser, der etwa dem Innendurchmesser der Rohre 1 und 2 entspricht, und einen Außendurchmesser, der größer ist als der Außendurchmesser der Rohre 1 und 2. Auf diese Weise wird die Außenseite der Rohrenden stärker bestrahlt als deren Innenseite, so daß dort das Kunststoffmaterial schneller schmilzt. Es hat sich gezeigt, daß hierdurch das geschmolzene Material von innen nach außen fließt, so daß, wie in der Stufe B gezeigt ist, an den Rohrenden Außenringwulste 4 aus geschmolzenem Material entstehen, während auf der Innenseite der freie Rohrquerschnitt unverändert bleibt. Durch das Abschmelzen der Rohrenden und das Abwandern des geschmolzenen Materials nach außen wächst der Abstand des Materials von der strahlenden Fläche des Heizelements 3. Da mit steigendem Abstand die Wirkung der Strahlung abnimmt, stellt sich bei vorgegebener Temperatur des Heizelements 3 nach kurzer Zeit ein Gleichgewichtszustand ein, bei dem das bereits geschmolzene Material in diesem Zustand gehalten, weiteres Material jedoch nicht mehr geschmolzen wird, und das geschmolzene Material auch nicht weiter wandert. Auf diese Weise kann die Ausbildung der Außenringwulste 4 gut kontrolliert werden.

Für das Heizelement 3 sind auch andere Konfigurationen möglich. So kann zum Beispiel auch der Zylinder 3.2 wärmestrahlend sein. Das Heizelement kann auch nur als Zylinder ausgebildet sein, in den beide Rohrenden eingeführt werden. Dem Ring 3.1 entspricht eine durchgehende Platte, deren zentraler Bereich keine Wärmestrahlung abgibt. Die gewünschte Wirkung kann schließlich auch durch eine durchgehende und über ihre gesamte Fläche gleichmäßig strahlende Platte erreicht werden, wenn deren Außendurchmesser einem Mehrfachen des Außendurchmessers der Rohre 1 und 2 entspricht. Auch in diesem Fall konzentriert sich die auf die Rohrenden auftreffende Wärmestrahlung im wesentlichen auf deren Außenflächen.

Nachdem sich die Außenringwulste 4 aus geschmolzenem Material gemäß Stufe B gebildet haben, wird das Heizelement 3 aus dem Spalt zwischen den Rohrenden herausgefahren und die Rohre 1 und 2 werden mittels geeigneter Führungsvorrichtungen, die Druckklauen 5 aufweisen, zueinander bewegt und gegeneinander gepreßt, so daß das geschmolzene Material beim Erstarren eine feste Verbindung der Rohre 1 und 2 im Bereich der Außenringwulste 4 herstellt. Die die Außenringwulste 4 aufnehmenden Aussparungen der Druckklauen 5 können in bestimmter Weise ausgebildet sein, um den Außenringwulsten 4 eine gewünschte Form zu geben.

Sollten die Außenringwulste 4 bei einer vorgegebenen Temperatur des Heizelements 3 nicht die erforderliche Größe erreichen, dann können die Rohre 1 und 2 gegebenenfalls schon während des Schmelzvorgangs geringfügig zum Heizelement 3 hin geschoben werden, so daß weiteres Material geschmolzen wird.

Um eine gewünschte Größe und Form des Außenringwulstes zu erhalten, kann das Heizelement 3 auch so ausgebildet sein, daß seine wärmestrahlende Fläche in Zonen mit unterschiedlicher Temperatur aufgeteilt ist. Auch kann es empfehlenswert sein, die Temperatur des Heizelements 3 während des Schmelzvorgangs zu verändern, insbesondere zu erhöhen, damit das Kunststoffmaterial am Beginn des Schmelzvorgangs, wenn es der strahlenden Fläche noch sehr nahe ist, nicht unzulässig überhitzt wird.

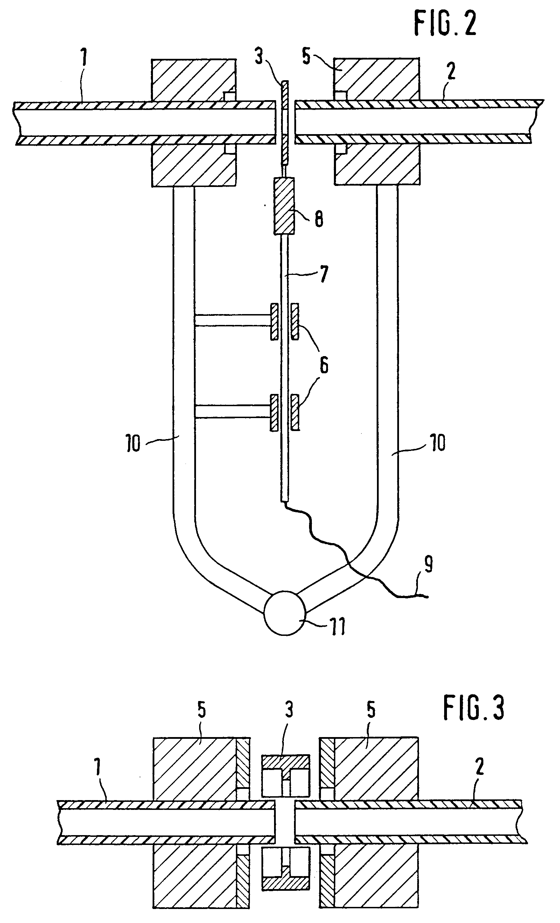

Fig. 2 zeigt ein Ausführungsbeispiel einer Vorrichtung zum endseitigen Verschweißen von zwei Rohren 1 und 2. Das ringförmige Heizelement 3 ist am Ende einer in Gleitlagern 6 linear verschiebbar gehaltenen Stange 7 befestigt. Auf dieser ist weiterhin ein Distanzstück 8 angebracht. Über eine elektrische Anschlußleitung 9 wird das Heizelement 3 mit elektrischer Energie versorgt. Die beiden Druckklauen 5 sind jeweils am Ende eines Schwenkarms 10 befestigt. Die beiden Schwenkasrme 10 sind jeweils gegensinnig um eine gemeinsame Achse 11 schwenkbar.

Zur Durchführung eines Schweißvorgangs wird zunächst die Stange 7 so verschoben, daß das Distanzstück 8 zwischen die Rohre 1 und 2 gelangt. Diese werden dann in Anlage an das Distanzstück 8 gebracht, so daß sie einen definierten Abstand zueinander sowie zu dem anschließend durch Verschieben der Stange 7 zwischen die Rohrenden gebrachten Heizelement haben. Nachdem das Material an den Rohrenden geschmolzen ist und sich entsprechende Außenringwulste gebildet haben, wird die Stange 7 so weit nach unten gefahren, daß das Heizelement 3 aus dem Querschnittsbereich der Rohre 1 und 2 herausbewegt wird, und es werden die Schwenkarme 10 zueinander geschwenkt, so daß die in den Druckklauen 5 eingespannten Rohre 1 und 2 endseitig gegeneinander gedrückt werden.

Bei dem Ausführungsbeispiel nach Fig. 3 besteht das Heizelement 3 aus zwei halbkreisförmigen Segmenten, die zur Erwärmung der Rohrenden zwischen diese geklappt werden und dann einen geschlossenen Ring ergeben. Nach erfolgter Erwärmung werden die Segmente wieder nach außen geklappt und die beiden Rohrenden werden mittels der Druckklauen 5 zusammengepreßt.

Die beschriebenen Ausführungsbeispiele zeigen das endseitige Verschweißen zweier Rohre mit gleichem Durchmesser. Das vorliegende Verfahren kann jedoch beispielsweise auch angewendet werden zum endseitigen Verschweißen eines Rohres oder Schlauches mit der eine radiale Öffnung aufweisenden Außenwand eines Rohres oder Schlauches, so daß ein radialer Abgang von diesem Rohr oder Schlauch geschaffen wird.

**Patentansprüche**

1. Verfahren zum Verschweißen zweier mit Öffnungen versehener, dünnwandiger Hohlkörper zur Erzielung einer dichten Durchgangsverbindung zwischen den Innenräumen der Hohlkörper, wobei mindestens einer der Hohlkörper als Rohr oder Schlauch ausgebildet ist, dessen eines Ende mit der eine Öffnung umgebenden Wand des anderen Hohlkörpers verschweißt wird, derart, daß die zu verschweißenden Flächen der Hohlkörper nach einer Erwärmung über die Schmelztemperatur durch Druck zusammengefügt werden,
**dadurch gekennzeichnet,**

daß die Erwärmung des Endes des mindestens eines Rohres (1,2) oder Schlauches in der Weise erfolgt, daß das geschmolzene Material ohne Verengung des freien Innenquerschnitts nach außen fließt und einen die Schweißfläche vergrößernden Außenringwulst (4) bildet.

2. Verfahren nach Anspruch 1, dadurch gekennzeichnet, daß die Stirnfläche des Rohrendes in einer zur Rohrlängsachse senkrechten Ebene liegt.

3. Verfahren nach Anspruch 1 oder 2, dadurch gekennzeichnet, daß die Temperatur über den Querschnitt der Stirnfläche des Rohrendes konstant ist und daß das Rohrende in Richtung der Rohrlängsachse auf der Außenseite über einen größeren Bereich erwärmt wird als auf der Innenseite.

4. Verfahren nach einem der Ansprüche 1 bis 3, dadurch gekennzeichnet, daß zur Erwärmung des Rohr- oder Schlauchendes eine diesem in vorgegebenem Abstand gegenüberliegende wärmestrahlende Platte (3.1) verwendet wird, die im Bereich außerhalb des Rohr- oder Schlauchquerschnittes eine höhere Temperatur aufweist als innerhalb dieses Querschnitts.

5. Verfahren nach einem der Ansprüche 1 bis 4, dadurch gekennzeichnet, daß zum Erwärmen der zu verschweißenden Flächen der Hohlkörper (1,2) ein wärmestrahlendes Heizelement (3) in jeweils vorgegebenem Abstand zwischen die Hohlkörper (1,2) gebracht wird.

6. Verfahren nach einem der Ansprüche 1 bis 7, dadurch gekennzeichnet, daß der Außenringwulst (4) durch geeignete Preßformen (5) beim Zusammenfügen der zu verschweißenden Flächen in gewünschter Weise ausgeformt wird.

7. Verfahren nach einem der Ansprüche 1 bis 6, dadurch gekennzeichnet, daß das Rohr (1,2) oder der Schlauch während der Erwärmung seines Endes zum Heizelement (3) hin nachgeschoben wird.

8. Vorrichtung zur Durchführung des Verfahrens nach einem der Ansprüche 1 bis 7, dadurch gekennzeichnet, daß zur Erwärmung des Endes des mindestens eines Rohres (1,2) oder Schlauches ein Heizelement (3) mit einer dem Rohrende gegenüberliegenden wärmestrahlenden Fläche vorgesehen ist, derart, daß die Stirnfläche des Rohrendes in gleichem Abstand von der wärmestrahlenden Fläche liegt und daß der in Rohrlängsrichtung liegende Teil des Rohrendes auf der Außenseite einer größeren wärmestrahlenden Fläche ausgesetzt ist als auf der Innenseite.

9. Vorrichtung nach Anspruch 8, dadurch gekennzeichnet, daß das Heizelement (3) aus einem der Stirnfläche des Rohrendes gegenüberliegenden wärmestrahlenden Ring (3.1) und einem das Rohrende in Rohrlängsrichtung übergreifenden wärmestrahlenden Zylinder (3.2) besteht.

10. Vorrichtung nach Anspruch 8, dadurch gekennzeichnet, daß das Heizelement (3) aus einem parallel zur Stirnfläche des Rohrendes angeordneten, dieser gegenüberliegenden Ring besteht, dessen Außendurchmesser einem Mehrfachen des Rohraußendurchmessers entspricht.

FIG. 1

A)

B)

C)

FIG.2

FIG.3

Europäisches
Patentamt

**EUROPÄISCHER RECHERCHENBERICHT**

Nummer der Anmeldung

EP  92 25 0091
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 117 903 (M.C. HIX)<br>* Spalte 1, Zeile 8 - Zeile 60; Abbildungen *<br>* Spalte 3, Zeile 31 - Zeile 45 *<br>--- | 1,2,6 | B29C65/14<br>B29C65/02<br>B29B13/02<br>//B29L23:22 |
| X<br>Y<br>A | EP-A-0 312 712 (GEORG FISCHER)<br>* das ganze Dokument *<br><br>--- | 1,4,5,7<br>2,3,6<br>8,10 | |
| X<br>Y<br>A | EP-A-0 313 731 (GEORG FISCHER)<br>* Spalte 2, Zeile 32 - Zeile 37; Abbildungen *<br><br>--- | 8,10<br>2,3<br>1 | |
| X | CH-A-493 323 (DEUTSCHE RHODIACETA AG)<br>* Abbildung 3 *<br>--- | 8,9 | |
| Y | DE-B-2 847 023 (KAMPOVSKY)<br>* Spalte 3, Zeile 27 - Zeile 32; Abbildungen *<br>--- | 6 | |
| A | PATENT ABSTRACTS OF JAPAN<br>vol. 7, no. 106 (M-213)(1251) 10. Mai 1983<br>& JP-A-58 028 332 ( HITACHI KASEI KOGYO KK )<br>19. Februar 1983<br>--- | 1,2,7 | |
| A | US-A-4 152 817 (R.C. COTTEN)<br>* Abbildungen 2-5 *<br>--- | 1,2,7 | **RECHERCHIERTE SACHGEBIETE (Int. Cl.5 )** |
| A | DE-B-2 254 189 (O. ANSCHUTZ)<br>* Spalte 2, Zeile 3 - Zeile 21; Abbildungen *<br>--- | 1,2,7 | B29C<br>B29B |
| A | SOVIET INVENTIONS ILLUSTRATED<br>Week 9048, 23. Januar 1991<br>Derwent Publications Ltd., London, GB;<br>AN 90-360294/48<br>& SU-A-1 558 696 (CHELYABINSK POLY)<br>--- | 6 | |
| A | DE-A-3 717 608 (DR SPIESS KUNSTSTOFF-RECYCLING)<br>* Ansprüche; Abbildungen *<br>--- | 6 | |
| A | US-A-4 398 879 (P. R. DUPONT)<br>* Abbildung 2 * | 1 | |

Der vorliegende Recherchenbericht wurde für alle Patentansprüche erstellt

| Recherchenort | Abschlußdatum der Recherche | Prüfer |
|---|---|---|
| DEN HAAG | 30 JUNI 1992 | CORDENIER J. |

Europäisches Patentamt

# EUROPÄISCHER RECHERCHENBERICHT

Nummer der Anmeldung

EP 92 25 0091
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| | --- | | |
| A | EP-A-0 263 980 (GEORG FISCHER)<br>* Spalte 15, Zeile 38 - Zeile 39 *<br>* Spalte 18, Zeile 45 - Zeile 51 *<br>* Ansprüche 1,4; Abbildungen * | 1,2,5,6 | |
| | --- | | |
| A | PATENT ABSTRACTS OF JAPAN<br>vol. 10, no. 191 (M-495)(2247) 4. Juli 1986<br>& JP-A-61 035 936 ( INOUE MPT ) 20. Februar 1986 | 1 | |
| | --- | | |
| A | US-A-2 972 371 (HERMANN)<br>* Abbildung 4 ref 4a,b * | | |
| | ----- | | |

**RECHERCHIERTE SACHGEBIETE (Int. Cl.5 )**

Der vorliegende Recherchenbericht wurde für alle Patentansprüche erstellt

| Recherchenort | Abschlußdatum der Recherche | Prüfer |
|---|---|---|
| DEN HAAG | 30 JUNI 1992 | CORDENIER J. |